# EUROPEAN PATENT SPECIFICATION

(11) **EP 2 305 725 B1**
(45) Date of publication and mention of the grant of the patent: **28.10.2015**
(21) Application number: 09773136.8
(22) Date of filing: 25.06.2009
(51) Int. Cl.: C08G 2/00, C08J 5/18, D01F 6/34

(54) **LOW-FISHEYE POLYACETAL RESIN**
FISCHAUGENARMES POLYACETALHARZ
RÉSINE DE POLYACÉTAL À FAIBLE FORMATION D'YEUX DE POISSON

(30) Priority: 02.07.2008 JP 2008173151
(43) Date of publication of application: 06.04.2011
(73) Proprietor: Mitsubishi Gas Chemical Company, Inc., Tokyo 100-8324 (JP)
(72) Inventor: KOBAYASHI, Daisuke, Yokkaichi-shi Mie 510-0886 (JP); OKAMURA, Akira, Yokkaichi-shi Mie 510-0886 (JP)
(74) Representative: Hoffmann Eitle
(86) International application number: PCT/JP2009/002929
(87) International publication number: WO 2010/001558

(56) References cited:
- EP-A1- 0 675 146
- EP-A1- 1 182 214
- JP-A- 2001 172 821
- JP-A- 2004 066 191
- JP-A- 2004 066 191
- JP-A- 2004 155 110
- JP-A- 2004 155 110
- JP-A- 2005 256 189
- JP-A- 2008 138 326
- JP-A- 2008 138 326
- JP-A- 2008 163 156
- JP-T- 2008 527 192
- US-A- 5 908 965

## Description

### TECHNICAL FIELD

The present invention relates to a polyacetal resin (low-fisheye polyacetal resin) which has high quality and few fisheyes. More specifically, it relates to a low-fisheye polyacetal resin which has excellent spinnability and little optical unevenness when molded into a film or a sheet.

### BACKGROUND ART

A polyacetal resin as an engineering plastic has excellent mechanical properties, sliding characteristics, friction and abrasion characteristics, chemical resistance, etc., and therefore is widely used for a major part of an automobile, an OA instrument, etc. Due to its orderly primary structure, the polyacetal resin exhibits high crystallinity and its use has been broadened around the field of injection molding. Recently, for use in extrusion, in particular, for use in a fiber, a film, or the like, study is being carried out to take advantage of the excellent characteristics of the polyacetal. For example, in Patent Document 1, the study for producing a fiber by using the polyacetal resin is carried out.
Document 2 relates to a filter constituted by layering a plurality of metal fiber filters. The filter may be used for polymer melt filtration. Document 2 exemplifies polymer melts which may be subjected to the polymer melt filtration by using the filter, and a polyacetal polymer is mentioned therein among a number of polymers.
Document 3 describes a polyacetal resin fiber which is obtained by blending a polyacetal resin with a hydrazide compound and a sterically hindered phenol in a specific amount. The polyacetal resin fiber has a diameter of 50 µm or less.
Document 4 relates to a method for producing a polyacetal T-die cast film.
Document 5 describes a build-up suppressant which is used for suppressing the formation of a build-up during a polymerization reaction. Examples demonstrate the effect of the build-up suppressant by polymerizing 100 parts of vinyl chloride monomer, 1150 ppm of hydrolyzed polyvinyl acetate and 600 ppm of t-butyl peroxineodecanoate/di-3,5,5-trimethyl hexanoyl phenoxide (1:1, w/w). The polymers obtained therein exhibit a small number of fisheyes, i.e. 2 to 11 per 100 cm².
Document 6 describes a process for producing a high-molecular-weight poly(dioxolane) by polymerizing 1,3-dioxolane.
Document 7 relates to a method for producing a saponified ethylene-vinyl acetate copolymer (EVOH). A thermoplastic resin (for example, polyacetal) may be mixed with the EVOH.

The above documents 2 to 7 do not disclose that a coarse polyacetal resin is subjected to a filtration by using a sintered filter having an absolute filtering accuracy of 50 micron or less.

### PRIOR ART DOCUMENT

### PATENT DOCUMENT

Patent Document 1: Japanese Patent Application Laid-Open No. 8-113823
Patent Document 2: JP 2004 066191 A
Patent Document 3: JP 2008 138326 A
Patent Document 4: JP 2004 155110 A
Patent Document 5: US 5 908 965 A
Patent Document 6: EP 0 675 146 A1
Patent Document 7: EP 1 182 214 A1

### SUMMARY OF THE INVENTION

### PROBLEMS TO BE SOLVED BY THE INVENTION

The present inventors found out that, when spinning is carried out by using a polyacetal resin, thread breaking and the like is caused by tiny foreign materials that are generally referred to as fisheye. Furthermore, the inventors also found out that an unfavorable appearance such as optical unevenness and the like is caused when the polyacetal resin is molded into a film. Moreover, the inventors found out that the fiber using the polyacetal resin is not satisfactory as a product.

Accordingly, it is an object of the invention to provide a polyacetal resin which has excellent spinnability, and has excellent moldability and little optical unevenness when molded into a film or a sheet.

### MEANS FOR SOLVING THE PROBLEMS

The inventors have conducted intensive studies to solve the above problems, and as a result, found out that the polyacetal resin having the number of fisheyes in a predetermined amount or less has excellent spinnability and film processability, and therefore completed the invention. That is, the invention relates to a polyacetal resin and a fiber, film or sheet using the same as described below.
(1) A polyacetal resin in which the number of fisheyes having a maximum length of 30 µm or longer is 10 or less per 25 cm² when it is measured using a film having a thickness of 30 µm, wherein the polyacetal resin is obtained by filtering a coarse polyacetal resin using a filter followed by granulation and the filter is a sintered filter having an absolute filtering accuracy of 50 micron or less.
(2) A fiber obtained by melt-spinning of the polyacetal resin as described in (1) in which a maximum diameter is 50 µm or less.
(3) A fiber obtained by melt-spinning of the polyacetal resin as described in (1) in which a maximum diameter is 30 µm or less.
(4) The polyacetal resin according to (1) in which the sintered filter consists of a metal fiber.
(5) A film, a sheet or a fiber which consists of the polyacetal resin as described in (1).
(6) The polyacetal resin according to (1) in which the number of fisheyes is one or more per 25 cm².

### EFFECTS OF THE INVENTION

According to the polyacetal resin of the invention, since the number of fisheyes is small, good spinnability with almost no occurrence of thread breaking, and good moldability with little optical unevenness in molding the polyacetal resin into a film or a sheet can be achieved.

### BRIEF DESCRIPTION OF THE DRAWINGS

FIG. 1 is a view schematically illustrating a fisheye.
FIG. 2 is a perspective view illustrating an example of the film according to the present invention.
FIG. 3 is a cross-sectional view illustrating an example of the fiber according to the present invention.

### MODE FOR CARRYING OUT THE INVENTION

The polyacetal resin having few fisheyes of the present invention is produced by filtering a coarse polyacetal resin followed by granulation, in which the filter is a sintered filter having an absolute filtering accuracy of 50 micron or less.

The polyacetal resin is a polymer which has an acetal structure shown below,

[Chemical Formula 1] -(-O-CRH-)-

(with the proviso that R represents a hydrogen atom, an organic group)
as a repeating structure, and it generally has an oxymethylene group shown below in which R is a hydrogen atom,

[Chemical Formula 2] -(-CH₂O-)-

as a main constitutional unit. The polyacetal resin used in the invention includes, in addition to the acetal homopolymer which consists only of the above repeating structure, a copolymer (block copolymer), a terpolymer or the like which has at least one repeating constitutional unit other than the above oxymethylene group, and it may also have a branched or a cross-linked structure as well as a linear structure.

To produce the polyacetal resin, a main raw material including trioxane is generally used. When the above acetal homopolymer is to be produced, the main raw material consists only of trioxane. When the copolymer or terpolymer is to be produced, the main raw material also includes a comonomer in addition to trioxane.

As for the comonomer that is used for the production of the copolymer or terpolymer, a cyclic formal or ether can be mentioned. Specific examples include 1,3-dioxolan, 2-ethyl-1,3-dioxolan, 2-propyl-1,3-dioxolan, 2-butyl-1,3-dioxolan, 2,2-dimethyl-1,3-dioxolan, 2-phenyl-2-methyl-1,3-dioxolan, 4-methyl-1,3-dioxolan, 2,4-dimethyl-1,3-dioxolan, 2-ethyl-4-methyl-1,3-dioxolan, 4,4-dimethyl-1,3-dioxolan, 4,5-dimethyl-1,3-dioxolan, 2,2,4-trimethyl-1,3-dioxolan, 4-hydroxymethyl-1,3-dioxolan, 4-butyloxymethyl-1,3-dioxolan, 4-phenoxymethyl-1,3-dioxolan, 4-chloromethyl-1,3-dioxolan, 1,3-dioxabicyclo[3,4,0]nonane, ethylene oxide, propylene oxide, butylene oxide, epichlorohydrin, styrene oxide, oxitane, 3,3-bis(chloromethyl)oxetane, tetrahydrofuran, oxepan, etc. Among these, 1,3-dioxolan is particularly preferable.

The addition amount of the comonomer is preferably 0.2 to 30 parts by weight, and more preferably 0.5 to 20 parts by weight relative to 100 parts by weight of trioxane. When the addition amount of the comonomer is more than 30 parts by weight, polymerization yield decreases. When it is less than 0.2 parts by weight, heat stability is lowered.

As the polymerization catalyst which is used for the production of the polyacetal resin, a common active cationic catalyst is used. Specific examples include (1) a Lewis acid, in particular, a product obtained by halogenating boron, tin, titanium, phosphorus, arsenic, antimony, etc, for example, boron trifluoride, tin tetrachloride, titanium tetrachloride, phosphorus pentachloride, phosphorus pentafluoride, arsenic pentafluoride and antimony pentafluoride and a compound like their complex compound or salt, (2) a proton acid, for example, trifluoromethane sulfonic acid, perchloric acid, an ester of a proton acid, in particular, an ester made from perchloric acid and a lower aliphatic alcohol, an anhydride of a proton acid, in particular, a mixed anhydride made from perchloric acid and a lower aliphatic carboxylic acid, or triethyloxonium hexafluorophosphate, triphenylmethyl hexafluoroarsenate, acetylhexafluoroborate, heteropoly acid or its acid salt, isopoly acid or its acid salt, etc. In particular, a compound including boron trifluoride or a hydrate and a coordination complex compound of boron trifluoride are preferable, and diethyl etherate boron trifluoride and dibutyl etherate boron trifluoride, which are the coordination complex with ethers, are particularly preferable. The used amount of the catalyst is generally 1×10⁻⁷ to 1×10⁻³ mole, and preferably 1×10⁻⁷ to 1×10⁻⁴ mole relative to 1 mole of trioxane. When the used amount of the catalyst is more than 1×10⁻³ mole, heat stability is lowered, and when it is less than 1×10⁻⁷ mole, the polymerization yield decreases.

In the production of the polyacetal resin, an appropriate molecular weight regulator may be used to regulate the molecular weight, if necessary. Examples of the molecular weight regulator include carboxylic acid, carboxylic acid anhydride, ester, amide, imide, phenols, an acetal compound, etc. In particular, phenol, 2,6-dimethylphenol, methylal and polyacetal dimethoxide are suitably used, and methylal is the most preferable. The molecular weight regulator is used alone or in the form of a solution. When the molecular weight regulator is used in the form of a solution, as a solvent, aliphatic hydrocarbons such as hexane, heptane, cyclohexane and the like, aromatic hydrocarbons such as benzene, toluene, xylene and the like, and halogenated hydrocarbons such as methylene dichloride, ethylene dichloride and the like can be exemplified. In general, the addition amount of these molecular weight regulators is controlled to be within the range of 0 to 1.0 parts by weight relative to 100 parts by weight of a mixed monomer of comonomer and trioxane, depending on the desired molecular weight. In general, these molecular weight regulators are added to a mixed raw material liquid of trioxane and comonomer. The site for addition is not specifically limited, but it is preferably supplied before supplying the active cationic catalyst to the mixed raw material liquid.

As the continuous type polymerization apparatus which is used for the production of the polyacetal resin, a kneader, a twin screw type continuous extrusion kneader and a twin shaft paddle type continuous mixer which have a strong stirring ability to cope with sudden solidification or heat, elaborate temperature control and a self-cleaning function to prevent adhesion of a scale during polymerization, and other continuous polymerization apparatuses for trioxane which have been suggested until now can be used. Two or more types of the polymerization apparatuses can be used in combination. Among these, a concave lens type equipped with a pair of shafts that rotate in the same direction in which the shafts are interlocked to each other, or a continuous type horizontal reactor in which a plurality of paddles with pseudo-triangle shape are inserted is preferable.

The polymerization time of 3 to 120 minutes is selected as polymerization time. In particular, 5 to 60 minutes are preferable. When the polymerization time is shorter than 3 minutes, polymerization yield or heat stability is lowered. When it is longer than 120 minutes, productivity deteriorates. From the viewpoint of the polymerization yield or heat stability, there is a preferred lower limit for the polymerization time depending on the ratio of the comonomer. As the ratio of the comonomer increases, it is necessary to extend the polymerization time accordingly.

After obtaining a bulk polymerization product by polymerizing the main raw materials including trioxane in the presence of a polymerization catalyst and a molecular weight regulator which is added depending on necessity, a catalyst deactivator is added to the bulk polymerization product.

As the catalyst deactivator, a trivalent organic phosphorus compound, an organic amine type compound, a hydroxide of an alkali metal or an alkali earth metal, etc. can be used. As the organic amine type compound, a primary, a secondary or a tertiary aliphatic amine or aromatic amine and heterocyclic amine, etc. can be used. Specific examples include ethylamine, diethylamine, triethylamine, mono-n-butylamine, di-n-butylamine, tripropylamine, tri-n-butylamine, N,N-dimethylbutylamine, aniline, diphenylamine, pyridine, piperidine, morpholine, melamine, methylolmelamine and the like. Among these, trivalent organic phosphorus compound and tertiary amine are preferable. The particularly preferred compound among the trivalent organic phosphorus compounds is triphenyl phosphine which is thermally stable and does not cause any coloration damage on a molded article by heat. The particularly preferred compounds among the tertiary amines are triethylamine and N,N-dimethylbutylamine. It is not necessary to add the catalyst deactivator in an amount which completely deactivates the catalyst. It may be an amount which enables the reduction in molecular weight of a bulk polymerization product during the deactivation treatment, which will be described below, to be inhibited within the range allowed for the product. The used amount of the catalyst deactivator is generally 0.01 to 500 times, and preferably 0.05 to 100 times the mole number of the catalyst used. When the catalyst deactivator is used in the form of a solution or a suspension, the solvent used is not particularly limited. For example, water and various aliphatic or aromatic organic solvents including alcohols, acetone, methyl ethyl ketone, hexane, cyclohexane, heptane, benzene, toluene, xylene, methylene dichloride, ethylene dichloride and the like can be mentioned. It is also possible that these are mixed and used.

For the deactivation treatment, it is preferable that the bulk polymerization product is a fine powder. As the polymerization reactor used for the deactivation treatment, a reactor having a function of fully crushing the bulk polymerization product is preferable. In addition, the bulk polymerization product may be crushed separately by using a crushing machine followed by addition of the deactivator. Alternatively, crushing and stirring can be carried out simultaneously in the presence of the deactivator. When the bulk polymerization product is not a fine powder, the catalyst included in the bulk polymerization product is not sufficiently deactivated, and as a result, depolymerization proceeds gradually by the residual catalyst having activity, causing a reduction in the molecular weight. For a case in which the molecular weight of the final product is lowered due to insufficient catalyst deactivation treatment, it is possible to employ a method of controlling the molecular weight of the final product by regulating the addition amount of the molecular weight regulator in advance considering the molecular weight reduction and increasing the molecular weight of the bulk polymerization product.

By heat-melting the coarse polyacetal resin obtained by carrying out the deactivation treatment of the polymerization catalyst, an unstable structure is removed by thermal decomposition, and after the filtration using a filter followed by granulation, the low-fisheye polyacetal resin is produced.

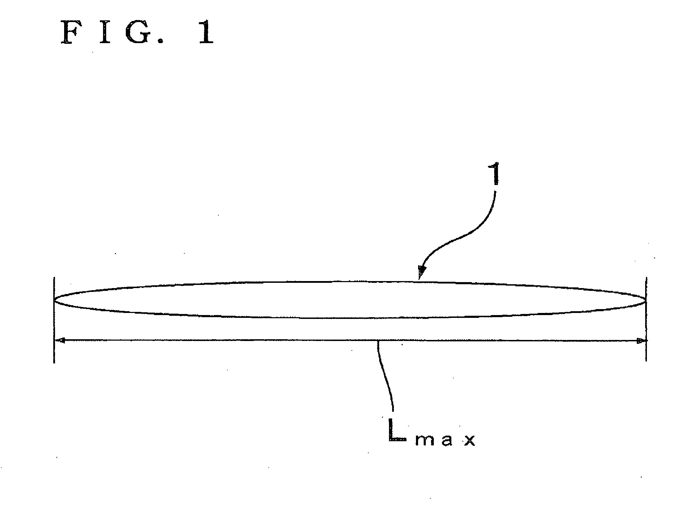

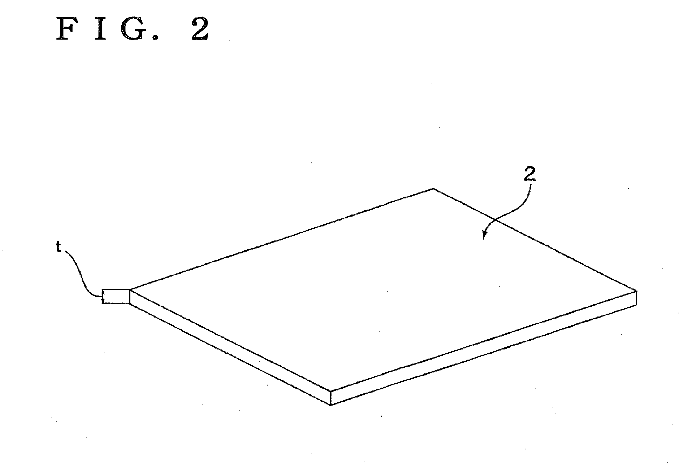

The number of the fisheyes that is required for the low-fisheye polyacetal resin indicates that, as shown in FIG. 1 and FIG. 2, the number of fisheye 1 in which the maximum length Lmax is 30 µm or longer is 10 or less per 25 cm², when measurement is made using a film 2 with a thickness t of 30 µm. The lower limit of the number of fisheye 1 is not particularly limited. From the viewpoint of spinnability and moldability, smaller number is preferable. However, considering the production efficiency, the number of fisheye 1 is one or more per cm², for example. Herein, fisheye 1 is defined as a foreign material which is found to be present by naked eye observation of the film 2 that is obtained by molding the polyacetal resin into the film 2. As the shape of fisheye 1, various shapes including a circular shape, an oval shape and the like are observed. When the shape of fisheye 1 is a shape other than a circular shape, for example, an oval shape, the maximum length Lmax of fisheye 1 is the length of the long axis. This is because that the long axis has the maximum length for an oval. When the shape of fisheye 1 has a circular shape, the diameter corresponds to the maximum length. Therefore, the maximum length Lmax of fisheye 1 is the value of the diameter. Moreover, the maximum length of fisheye 1 indicates the maximum length in a two-dimensional projected image when fisheye 1 is projected on the surface of the film 2.

The method of thermally melting the coarse polyacetal resin is not specifically limited. However, as an example, detailed description of a suitable method is described below.

The coarse polyacetal resin which is obtained by catalyst deactivation treatment using a mono- or multi-axial extruder equipped with a vent is melt, introduced to an apparatus for volatilization under reduced pressure, and volatilized under reduced pressure for a pre-determined time. After that, the molten resin is drawn using a gear pump, filtered through a filter and granulated.

Volatilization under reduced pressure is performed at the pressure of 9.33×10 to 1.33×10⁻³ kPa (the reduced pressure indicates absolute pressure, and ditto for the followings) while carrying out kneading under melting. The degree of reduced pressure is preferably within the range of 6.67×10 to 1.33×10⁻³ kPa, more preferably within the range of 2.67×10 to 1.33×10⁻³ kPa, and most preferably within the range of 1.33×10 to 1.33×10⁻³ kPa.

As the apparatus for volatilization under reduced pressure, a high-viscosity type vertical or horizontal polymerization apparatus can be used. With respect to the vertical polymerization apparatus, stirring blade is not specifically limited. However, a high-viscosity stirring blade which enables homogenous mixing of the molten polyacetal resin is preferable, and a ribbon blade, a lattice blade, a max blend impeller, a full zone blade, their modified blades and the like are exemplified. As the horizontal polymerization apparatus, a self-cleaning type horizontal polymerization apparatus having excellent surface renewability in which a mono- or multi-axial stirring blade is installed is preferably used. As a specific example of the horizontal polymerization apparatus, a spectacles-blade or a lattice-blade type reactor manufactured by Hitachi Seisakusho Co., Ltd., a SCR or a NSCR type reactor manufactured by Mitsubishi Heavy Industries, Ltd., a KRC kneader or a SC processor manufactured by Kurimoto Tekkojo Co., Ltd., BIVOLAK manufactured by Sumitomo Heavy Industries. Ltd., etc. are exemplified.

As the filter which is used for the filtration of the molten resin described above, a wire mesh, a sintered filter and the like can be mentioned. As for the wire mesh, any one of plain weave, twill weave, plain dutch weave, crimp weave, welded wire mesh, tortoise shell wire mesh, etc. can be exemplified. In the present invention, a sintered filter is used. As the sintered filter, any one of a laminate of multiple metal wire mesh, which is represented by stainless, formed into a single body by sintering, a non-woven fabric filter which is obtained by sintering treatment of a felt consisting of metal fibers, etc. can be used. Instead of having one kind of holes on a plane like wire mesh, etc., this sintered filter is a filter with a stereo structure having various hole diameters in which pressed metal fibers are entangled with each other. It is also possible to use a disk type filter, a tube type filter, a flat type cylindrical filter and a pleated type cylindrical filter that are obtained by processing these filter media. To achieve the low-fisheye number level, i.e., the fisheye number level of 10 or less per 25 cm², a sintered filter having absolute filtering accuracy of 50 µm or less, and preferably 10 µm or less is advantageous.

Herein, the screen pack is used as a name of a constitutional filter in which a plurality of filters is overlapped. In addition, as the absolute filtering accuracy is defined as a "maximum glass bead diameter which passes through a filter medium according to the method of JIS-B8356," a lower number indicates higher accuracy.

Furthermore, one or more kinds of additives such as a known anti-oxidant (for example, triethylene glycol-bis[3(3-t-butyl-5-methyl-4-hydroxyphenyl) propionate]), a heat stabilizing agent (for example, melamine), etc. can be added to the coarse polyacetal resin during the heat melting treatment.

Furthermore, additives such as a coloring agent, a nucleating agent, a plasticizer, a fluorescent whitening agent, or a releasing agent such as fatty acid ester type including pentaerythritol tetrastearate, etc. or silicone type compound, a sliding agent, an anti-static agent like polyethylene glycol or glycerin, a higher fatty acid salt, a UV absorbing agent like benzotriazole type or benzophenone type compound, or a light stabilizing agent like hindered amine type, etc. can be added depending on the needs.

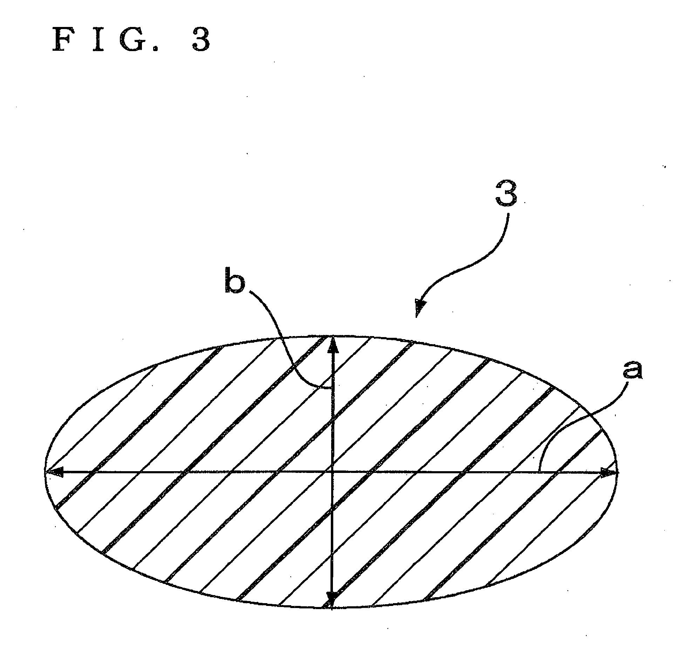

Furthermore, the fiber of the present invention is a fiber which is obtained by melt extrusion of the polyacetal resin described above, and it has the maximum diameter of 50 µm or less. In such case, thread breaking does not occur when it is processed as a fiber. Herein, the cross-sectional shape of the fiber can be either a circular shape or an oval shape. FIG. 3 is a cross-sectional view showing an example of the fiber according to the present invention. As shown in FIG. 3, for a case in which the cross-sectional shape of fiber 3 has an oval shape, for example, the length of long axis a is the maximum diameter of fiber 3. For a case in which the cross-sectional shape of fiber 3 has a circular shape, for example, the length of long axis a becomes identical to the length of short axis b. Accordingly, either the length of long axis a or short axis b is the maximum diameter.

Still furthermore, for a case in which the number of fisheyes in the polyacetal resin is 10 per 25 cm², the maximum diameter of the fiber is preferably 30 µm or less.

FIG. 2 shows an example of the film (or sheet) of the invention. The film 2 shown in FIG. 2 consists of the polyacetal resin described above. The thickness t of film 2 varies depending on use, and therefore cannot be precisely defined. For example, it is 10 to 200 µm. According to the invention, the one with the thickness of 200 µm or less is referred to as a "film," while the one with the thickness of more than 200 µm is referred to as a "sheet."

### EXAMPLES

Herein below, specific examples of the present invention will be explained, but the invention is not limited by the examples.

### <Example 1>

To a twin screw continuous polymerization apparatus equipped with a self-cleaning type paddle having a jacket of which temperature is set at 65°C, 100 parts by weight of trioxane, 1,3-dioxolan in an amount which is represented as "DOL amount" in Table 1 and a benzene solution containing boron trifluoride diethyl etherate as a catalyst were continuously introduced. At that time, the continuous introduction was performed to have 20 ppm of boron trifluoride diethyl etherate relative to 1 mol of trioxane. Moreover, to the twin screw continuous polymerization apparatus, methylal was continuously introduced as a molecular weight regulator in an amount that is required to adjust the limiting viscosity to 1.1 to 1.5 dl/g. And then, the polymerization was carried out continuously such that the residence time for the materials that are introduced to the continuous polymerization apparatus is 20 minutes. The polymerization product thus obtained was introduced to a mixer for a terminating agent. After that, through the inlet of the mixer for a terminating agent, triphenyl phosphine in 2 molar times the amount of the catalyst used was continuously introduced as a benzene solution to the mixer for a terminating agent. After inactivating the catalyst, the polymerization product was crushed to obtain the coarse polyacetal copolymer.

To 100 parts by weight of the coarse polyacetal copolymer obtained, 0.3 parts by weight of triethylene glycol-bis[3(3-t-butyl-5-methyl-4-hydroxyphenyl)propionate] (trade name: IRGANOX 245, manufactured by Ciba-Geigy K.K.) and 0.025 parts by weight of melamine were added and mixed with a Henschel type blender to obtain a mixture.

Next, thus-obtained mixture was introduced to a co-rotating twin screw extruder (manufactured by The Japan Steel Works, Ltd., inner diameter of 69 mm, L/D=31.5) at the rate of 60 kg/hour, and then melted at 220°C in the state of reduced pressure of 20 kPa at vent part. After that, the molten product was continuously introduced to a twin screw surface-renewal type horizontal kneader (60 L of the effective content volume, which is the volume obtained by subtracting the volume occupied by stirring blades from the total content volume). At that time, the liquid surface control was carried out so as to obtain the residence time of 25 minutes for the molten product in the twin screw surface-renewal type horizontal kneader. Moreover, while performing the volatilization at 220°C and reduced pressure of 20 kPa inside the surface-renewal type horizontal kneader, the kneaded product was continuously drawn using a gear pump, subjected to pressure elevation, filtered through a sintered filter having filtering accuracy of 10 µm, and then subjected to pelletization to obtain the polyacetal resin.

### <Example 2>

Except that a sintered filter having filtering accuracy of 20 µm is used as a filter, the polyacetal resin was produced in the same manner as Example 1.

### <Reference example 1>

Except that a wire mesh having mesh size of 500 mesh, that is, a screen pack is used as a filter, the polyacetal resin was produced in the same manner as Example 1.

### <Example 3>

Except that the addition amount of 1,3-dioxolan is changed to 4.2 parts by weight (phr), the polyacetal resin was produced in the same manner as Example 2.

### <Example 4>

Except that the addition amount of 1,3-dioxolan is changed to 13 parts by weight (phr), the polyacetal resin was produced in the same manner as Example 2.

### <Comparative example 1>

Except that the filter is not used and the addition amount of 1,3-dioxolan is changed to 0.1 parts by weight (phr), the polyacetal resin was produced in the same manner as Example 1.

### <Comparative example 2>

Except that the filter is not used, the polyacetal resin was produced in the same manner as Example 1.

With the polyacetal resins that are obtained in from Examples 1 to 4, Reference example 1 and Comparative examples 1 and 2 as described above, the number of fisheyes and the maximum winding speed were measured. The measurement of the number of fisheyes and maximum winding speed was carried out according to the method as follows.

### [Measurement of fisheye]

By using a T die, the polyacetal resins of Examples 1 to 4, Reference example 1 and Comparative example 2 were molded into a film having a thickness of 30 µm. Then, by observing with naked eye the surface of the film and counting the number of fisheyes having a maximum length of 30 µm or longer that are included in an area of 5 cm square, the number of fisheyes was measured. The results are shown in Table 1.

### [Maximum winding speed]

The polyacetal resins of Examples 1 to 4, Reference example 1 and Comparative example 2 were wound by using a spinning machine which includes an apparatus for melt kneading with the cylinder set temperature of 200°C, a gear pump, and a discharge nozzle (diameter of 0.8 mm, 120 holes) while the discharge amount is set at 3 kg/h. At that time, the revolution number at which thread breaking occurs right below the nozzle was recorded, and this revolution number was taken as an indicator of spinnability. The results are shown in Table 1. In addition, regarding the polyacetal resin of Comparative example 1, foams were generated at the nozzle part of the spinning machine, and therefore the measurement of the maximum winding speed could not be carried out.

**[Table 1]**

| | DOL amount [phr] | Filter | Mesh size [mesh] | Filtering accuracy [µm] | Fisheye [number/25 cm²] | Maximum winding speed [m/min] | Others |
|---|---|---|---|---|---|---|---|
| Example 1 | 1 | Sintered filter | - | 10 | 0 | 650 | |
| Example 2 | 1 | Sintered filter | - | 20 | 6 | 400 | |
| Reference Example 1 | 1 | Wire mesh | 500 | 60 | 42 | 250 | |
| Example 3 | 4.2 | Sintered filter | - | 20 | 2 | 500 | |
| Example 4 | 13 | Sintered filter | - | 20 | 4 | 600 | |
| Comparative example 1 | 0.1 | | - | - | - | - | Foams at the nozzle part |
| Comparative example 2 | 1 | | - | - | 154 | 100 | |

As it is indicated in Table 1, the polyacetal resins of Examples 1 to 4 and Reference example 1 have a significantly increased maximum winding speed compared to the polyacetal resin of Comparative example 2, and therefore it was found that they have excellent spinnability.

### EXPLANATION OF REFERENCE NUMERALS AND SYMBOLS

1: fisheye, 2: film, 3: fiber, a: long axis (maximum length), b: short axis, t: thickness, Lmax: maximum length

## Claims

1. A polyacetal resin in which the number of fisheyes having a maximum length of 30 µm or longer is 10 or less per 25 cm² when it is measured using a film having a thickness of 30 µm, wherein the polyacetal resin is obtained by filtering a coarse polyacetal resin using a filter followed by granulation and the filter is a sintered filter having an absolute filtering accuracy of 50 micron or less.

2. A fiber obtained by melt-spinning of the polyacetal resin as claimed in Claim 1, wherein a maximum diameter is 50 µm or less.

3. A fiber obtained by melt-spinning of the polyacetal resin as claimed in Claim 1, wherein a maximum diameter is 30 µm or less.

4. The polyacetal resin according to Claim 1, wherein the sintered filter comprises a metal fiber.

5. A film comprising the polyacetal resin as claimed in Claim 1.

6. A sheet comprising the polyacetal resin as claimed in Claim 1.

7. A fiber comprising the polyacetal resin as claimed in Claim 1.

8. The polyacetal resin according to Claim 1, wherein the number of fisheyes is one or more per 25 cm².

## Patentansprüche

1. Polyacetalharz, worin die Anzahl von Stippen mit einer maximalen Länge von 30 µm oder länger 10 oder weniger je 25 cm² beträgt, wenn dies unter Verwendung einer Folie mit einer Dicke von 30 µm gemessen wird, worin das Polyacetalharz erhalten ist durch Filtern eines körnigen Polyacetalharzes unter Verwendung eines Filters, gefolgt von Granulierung, und der Filter ein gesinterter Filter mit einer absoluten Filtergenauigkeit von 50 µm oder weniger ist.

2. Faser, erhalten durch Schmelzspinnen des Polyacetalharzes gemäß Anspruch 1, worin der maximale Durchmesser 50 µm oder weniger beträgt.

3. Faser, erhalten durch Schmelzspinnen des Polyacetalharzes gemäß Anspruch 1, worin der maximale Durchmesser 30 µm oder weniger beträgt.

4. Polyacetalharz gemäß Anspruch 1, worin der gesinterte Filter eine Metallfaser umfasst.

5. Folie, umfassend das Polyacetalharz gemäß Anspruch 1.

6. Bahn, umfassend das Polyacetalharz gemäß Anspruch 1.

7. Faser, umfassend das Polyacetalharz gemäß Anspruch 1.

8. Polyacetalharz gemäß Anspruch 1, worin die Anzahl von Stippen ein oder mehr je 25 cm² beträgt.

## Revendications

1. Résine de polyacétal dans laquelle le nombre d'yeux de poisson ayant une longueur maximale de 30 µm ou plus est de 10 ou moins par 25 cm² lorsqu'il est mesuré en utilisant un film ayant une épaisseur de 30 µm, dans laquelle la résine de polyacétal est obtenue par filtration d'une résine de polyacétal grossière en utilisant un filtre suivi d'une granulation et le filtre est un filtre fritté ayant une précision de filtration absolue de 50 microns ou moins.

2. Fibre obtenue par filage à chaud de la résine de polyacétal telle que revendiquée dans la revendication 1, dans laquelle un diamètre maximal est de 50 µm ou moins.

3. Fibre obtenue par filage à chaud de la résine de polyacétal telle que revendiquée dans la revendication 1, dans laquelle un diamètre maximal est de 30 µm ou moins.

4. Résine de polyacétal selon la revendication 1, dans laquelle le filtre fritté comprend une fibre métallique.

5. Film comprenant la résine de polyacétal telle que revendiquée dans la revendication 1.

6. Feuille comprenant la résine de polyacétal telle que revendiquée dans la revendication 1.

7. Fibre comprenant la résine de polyacétal telle que revendiquée dans la revendication 1.

8. Résine de polyacétal selon la revendication 1, dans laquelle le nombre d'yeux de poisson est un ou plus par 25 cm².
